# EUROPEAN PATENT APPLICATION

(11) **EP 4 485 578 A1**
(43) Date of publication of application: **01.01.2025**
(21) Application number: 22958579.9
(22) Date of filing: 28.10.2022
(51) Int. Cl.: H01M 4/62, H01M 10/0525

(54) **POLYMER, POSITIVE ELECTRODE MATERIAL COMPOSITION, AND USE THEREOF**

(30) Priority: 15.09.2022 WO PCT/CN2022/119069
(71) Applicant: Contemporary Amperex Technology Co., Limited, Ningde, Fujian 352100 (CN)
(72) Inventor: PU, Jingjing, Ningde, Fujian 352100 (CN); WU, Yanying, Ningde, Fujian 352100 (CN); GAN, Xiongping, Ningde, Fujian 352100 (CN); WANG, Xinghui, Ningde, Fujian 352100 (CN); LI, Shisong, Ningde, Fujian 352100 (CN)
(74) Representative: Jacob, Reuben Ellis
(86) International application number: PCT/CN2022/128294
(87) International publication number: WO 2024/055390

(57) **Abstract**

Provided in the present application are: a polymer, a positive electrode material composition, a positive electrode slurry, a positive electrode sheet, a secondary battery, and an electric apparatus. The polymer comprises an anchoring group, a solvated chain segment, and a terminal group. The anchoring group is any one or more selected from -COOR1, -SO3R2 and -PO(OR3)OR4, wherein R1, R2, R3 and R4 each independently comprise a first group and a second group, the first group is H, and the second group is any one or more selected from C1-C12 alkyl, C6-C20 aryl and C5-C20 heteroaryl. The solvated chain segment is any one or more selected from chain segments consisting of the following structural units. In the additive, the anchoring group can improve the dispersion effect, and the solvated chain segment can improve the flexibility of electrode sheets.

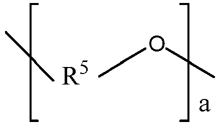

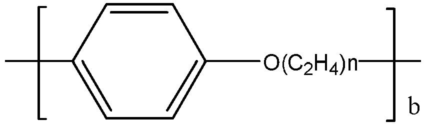

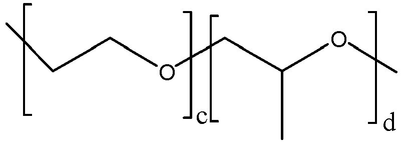

## Description

### TECHNICAL FIELD

This application relates to the field of battery technology, and in particular, to a polymer, a positive electrode material composition, a positive electrode slurry, a positive electrode plate, a secondary battery, and an electrical device.

### BACKGROUND

Batteries are closely related to people's lives and widely used in various small portable electronic devices. With the aggravation of energy shortages and environmental pollution problems, batteries have become a core factor in large devices such as electric vehicles and clean energy storage devices. With the continuous development of lithium-ion batteries, the performance requirements and working environment requirements on lithium-ion batteries are increasingly higher. The requirements include safety, high efficiency, high capacity, high rate, and a long cycle life. Compared with layered LiCoO₂ as a conventional positive electrode material of lithium-ion secondary batteries, spinel-structured LiFePO₄ is characterized by a wider source of raw materials, a lower price, and no environmental pollution. In addition, lithium iron phosphate (LiFePO₄) is significantly superior in high-temperature performance and safety.

Depending on the manufacturing process of the lithium iron phosphate in the market, the degrees of polarity and non-polarity (or low polarity) of a microscopic surface vary. Accordingly, in preparing a lithium iron phosphate slurry, the slurry is hardly dispersible and gels. At the same time, multitudinous additives emerge in the market. However, the additives are not universally applicable. During production of the additives, a corresponding additive needs to be developed according to the characteristics of a main material, and the production line also needs to be constantly switched between different models synchronously, thereby drastically impairing the production efficiency.

### SUMMARY

This application provides a polymer, a positive electrode material composition, a positive electrode slurry, a positive electrode plate, a secondary battery, and an electrical device to solve the problem of deterioration of cycle performance of the battery caused by difficulty of uniform dispersion of a positive active material in an active layer.

A first aspect of this application provides a polymer. The polymer includes an anchor group, a solvating segment, and an end group. The anchor group is any one or more selected from -COOR¹, -SO₃R², or -PO(OR³)OR⁴. R¹, R², R³ and R⁴ each independently include a first group and a second group. The first group is H. The second group is any one or more selected from C₁ to C₁₂ alkyl, C₆ to C₂₀ aryl, or C₅ to C₂₀ heteroaryl.

The solvating segment is any one or more selected from segments that include the following structural units:

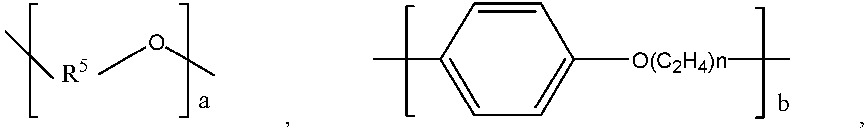

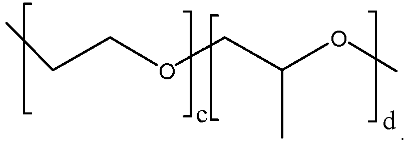

R⁵ is any one selected from C₁ to C₆ alkylidene, and 30 ≤ a ≤ 60, 1 ≤ n ≤ 10, 1 ≤ b ≤ 8, 0 ≤ c ≤ 20, and 8 ≤ d ≤ 60.

In the polymer, both the anchor group and the end group are connected to the solvating segment by a chemical bond. The polymer can contain the specified anchor group and the solvating segment at the same time. The anchor group include a first group and a second group. The first group H is an ionizable group, and can adsorb a polar group (such as Li₂CO₃ and Li₃PO₄) in the positive active material. The second group is a non-ionizable group, and can adsorb a non-polar group (such as coating carbon) in the positive active material. By containing such groups, the anchor group can implement adsorption and dispersion of the positive active material, and therefore, can implement multi-site adsorption for the positive active material of high polarity and the positive active material of low polarity, so as to efficiently disperse the positive active material. At the same time, the structure contains a solvating segment. The solvating segment is stretched in a solvent of the positive electrode slurry to play a role of steric hindrance, thereby further improving the dispersion effect, and in turn, improving dispersibility of the positive active material and the conductive agent, forming a better conductive network in a positive film layer, reducing a film resistance (making the resistance be less than or equal to 1 S2), and improving an initial Coulombic efficiency and cycle performance of the secondary battery. In addition, the solvating segment contains a spin-flexible group such as C-O or C-C, thereby also increasing the flexibility of the electrode plate, and solving the problems such as self-discharge of the battery caused by cracks of an inner coil of a wound electrode plate that is brittle due to a thick coating layer on the electrode plate and a high compaction density.

In some embodiments, a molar ratio between the anchor group, the solvating segment, and the end group is (1 to 1.5): (8 to 8.8): (0.2 to 0.5), thereby improving the efficacy of the polymer used as an additive of the positive electrode material composition.

In any embodiment of the first aspect, the second group is any one or more selected from C₁ to C₆ alkyl or C₆ to C₁₂ aryl. Optionally, 30 ≤ a ≤ 40, 1 ≤ n ≤ 5, 4 ≤ b ≤ 8, 1 ≤ c ≤ 10, 8 ≤ d ≤ 20. Optionally, the end group is any one or more selected from C₁ to C₁₂ alkyl, C₁ to C₁₂ alkoxy, or C₆ to C₂₀ aryl; and further optionally, the end group is any one or more selected from C₁ to C₆ alkyl, C₁ to C₆ alkoxy, or C₆ to C₁₂ aryl. When the polymer containing the second group and the end group forms a slurry, the viscosity of the slurry is reduced. Therefore, the positive active material is more dispersible in the solvent, thereby improving the dispersibility of the positive active material in the solvent, and effectively alleviating the problem of cracks of the coated positive electrode plate.

In any embodiment of the first aspect, the molar ratio between the first group and the second group is controlled to be 2: 8 to 8: 2 to meet the dispersion requirements of positive active materials with different polarities.

In any embodiment of the first aspect, a weight-average molecular weight of the polymer is 500 to 20000, and optionally 1000 to 10000. The polymer with a weight-average molecular weight falling within the above range further improves the dispersibility of the positive active material on the one hand, and on the other hand, helps to control the viscosity of the formed positive electrode slurry, and facilitates coating, thereby further alleviating the problem of cracks of the coated positive electrode plate.

A second aspect of this application provides a positive electrode material composition, including a positive active material, a conductive agent, and an additive. The additive is any one of the polymers disclosed in the first aspect.

The polymer of this application can implement multi-site adsorption for the positive active material of high polarity and the positive active material of low polarity, thereby achieving the purpose of efficiently dispersing positive active materials. At the same time, the structure contains a solvating segment. The solvating segment further improves the dispersibility of the positive active material and the conductive agent, forms a better conductive network in a positive film layer, reduces a film resistance (makes the resistance be less than or equal to 1 S2), and improves the initial Coulombic efficiency and cycle performance of the secondary battery. In addition, the solvating segment contains a spin-flexible group such as C-O or C-C, thereby also increasing the flexibility of the electrode plate, and solving the problems such as self-discharge of the battery caused by cracks of an inner coil of a wound electrode plate that is brittle due to a thick coating layer on the electrode plate and a high compaction density.

In any embodiment of the second aspect, a mass percent of the additive in the positive electrode material composition is 0.01% to 3%, and optionally 0.2% to 0.5%. The additive with a mass percent falling within the above range not only utilizes its sufficient anchor groups to sufficiently disperse the positive active material, but also preventing an excessive additive dosage from impairing the energy density of the subsequently formed positive electrode plate, thereby improving the initial Coulombic efficiency and cycle capacity retention rate of the secondary battery.

In any embodiment of the second aspect, a mass percent of the positive active material in the positive electrode material composition is 94% to 99%. Optionally, the positive active material includes any one or more of lithium iron phosphate, lithium manganese iron phosphate, lithium nickel cobalt aluminum oxide, lithium nickel cobalt manganese oxide, magnesium-rich lithium nickel cobalt manganese oxide, lithium manganese spinel, or lithium nickel manganese spinel. The positive electrode material composition of this application is applicable to dispersion of various positive active materials, especially lithium iron phosphate positive active materials with varying polarities.

In any embodiment of the second aspect, a particle diameter Dv₅₀ of the positive active material is 0.8 µm to 2.5 µm, thereby preventing a small particle diameter from causing agglomeration and gelling of the positive active material and preventing a large particle diameter from impairing the rate performance.

In any embodiment of the second aspect, a mass percent of the conductive agent in the positive electrode material composition is 0.3% to 3%. Optionally, the conductive agent includes one or more of conductive carbon black, conductive graphite, metal particles, carbon nanotubes, carbon fibers, graphene, or a conductive polymer, thereby maximally improving the conductivity of the formed positive film layer.

In any embodiment of the second aspect, the positive electrode material composition further includes a binder. Optionally, a mass percent of the binder in the positive electrode material composition is 0.5% to 3%. Optionally, the binder includes one or more of polyvinylidene difluoride, polytetrafluoroethylene, poly(vinylidene difluoride-co-tetrafluoroethylene), poly(vinylidene difluoride-co-hexafluoropropylene), poly(vinylidene difluoride-co-propylene), poly(tetrafluoroethylene-co-hexafluoropropylene), poly(tetrafluoroethylene-co-ethylene), poly(vinylidene difluoride-co-chlorotrifluoroethylene), poly(vinylidene difluoride-co-trifluoroethylene), or poly(vinylidene difluoride-hexafluoropropylene-co-tetrafluoroethylene). This maximally improves the adhesion of the formed positive active material to the current collector and further alleviates the problem of cracks of the electrode plate.

A third aspect of this application provides a positive electrode slurry, including a solvent and any one of the positive electrode material compositions according to the second aspect. The positive electrode slurry of this application contains the additive disclosed above, and therefore, the positive active material is uniformly dispersed in the positive electrode slurry.

In any embodiment of the third aspect, by adjusting the content of the solvent in the positive electrode slurry and adjusting ingredients of the positive electrode material composition to satisfy the above range, the viscosity of the positive electrode slurry is further controlled to be 4000 to 30000 mPa·s.

A fourth aspect of this application provides a positive electrode plate, including a current collector and a positive film layer. The positive film layer includes any one of the positive electrode material compositions disclosed in the second aspect or is formed by drying any one of the positive electrode slurries disclosed in the third aspect. The positive film layer of this application includes the positive electrode material composition or is formed by drying the positive electrode slurry. Therefore, the positive electrode active materials in the positive film layer are uniformly dispersed and highly conductive, and possess a lower film resistance and higher flexibility, thereby effectively alleviating the self-discharge problem of the battery containing the positive film layer.

A fifth aspect of this application provides a secondary battery, including a positive electrode plate, a separator, and a negative electrode plate. The positive electrode plate is any one of the positive electrode plates disclosed above.

An eighth aspect of this application provides an electrical device, including a secondary battery or a battery module or a battery pack. The secondary battery is selected from the secondary batteries disclosed above.

The positive electrode material composition of this application contains the above additive. Therefore, the positive active materials in the positive electrode slurry formed by the positive electrode material composition are uniformly dispersed, so that the content of the positive active material in the positive electrode slurry can be increased. The resulting positive electrode plate possesses a better conductive network, reduces the film resistance, and improves the flexibility of the film. Therefore, the compaction density of the secondary battery is increased, the self-discharge rate is reduced, the initial Coulombic efficiency and cycle performance are excellent, and the safety of the electrical device is improved.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic diagram of a secondary battery according to an embodiment of this application;
FIG. 2 is an exploded view of a secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of a battery pack shown in FIG. 4 according to an embodiment of this application; and
FIG. 6 is a schematic diagram of an electrical device that uses a secondary battery as a power supply according to an embodiment of this application.

The drawings are not drawn to scale.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

The following describes in detail a polymer, a positive electrode material composition, a positive electrode slurry, a positive electrode plate, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a range of 60 to 120 and a range of 80 to 110 are set out for a given parameter, it is expectable that such ranges may be understood as 60 to 110 and 80 to 120. In addition, if lower-limit values 1 and 2 are set out, and if upper-limit values 3, 4, and 5 are set out, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

### [Secondary battery]

A secondary battery, also known as a rechargeable battery or storage battery, is a battery that is reusable after an active material in the battery is activated by charging the battery that has been discharged.

Generally, a secondary battery includes a positive electrode plate, a negative electrode plate, a separator, and an electrolyte solution. During charge and discharge of the battery, active ions (such as lithium ions) are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate while allowing passage of active ions. The electrolyte solution is located between the positive electrode plate and the negative electrode plate, and primarily serves to conduct the active ions.

### [Polymer]

An embodiment of this application provides a polymer. The polymer includes an anchor group, a solvating segment, and an end group. The anchor group is any one or more selected from -COOR¹, -SO₃R², or -PO(OR³)OR⁴. R¹, R², R³ and R⁴ each independently include a first group and a second group. The first group is H. The second group is any one or more selected from C₁ to C₁₂ alkyl, C₆ to C₂₀ aryl, or C₅ to C₂₀ heteroaryl.

The solvating segment is any one or more selected from segments that include the following structural units:

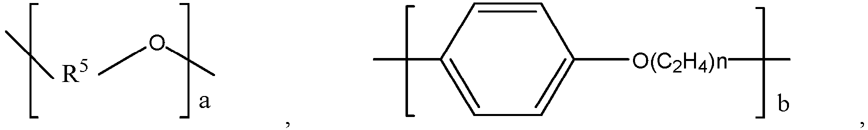

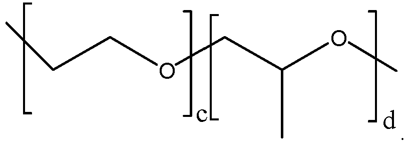

R⁵ is any one selected from C₁ to C₆ alkylidene, and 30 ≤ a ≤ 60, 1 ≤ n ≤ 10, 1 ≤ b ≤ 8, 0 ≤ c ≤ 20, and 8 ≤ d ≤ 60.

In the polymer, both the anchor group and the end group are connected to the solvating segment by a chemical bond. The polymer can contain the specified anchor group and the solvating segment at the same time. The anchor group include a first group and a second group. The first group H is an ionizable group, and can adsorb a polar group (such as Li₂CO₃ and Li₃PO₄) in the positive active material. The second group is a non-ionizable group, and can adsorb a non-polar group (such as coating carbon) in the positive active material. By containing such groups, the anchor group can implement adsorption and dispersion of the positive active material, and therefore, can implement multi-site adsorption for the positive active material of high polarity and the positive active material of low polarity, so as to efficiently disperse the positive active material. At the same time, the structure contains a solvating segment. The solvating segment is stretched in a solvent of the positive electrode slurry to play a role of steric hindrance, thereby further improving the dispersion effect, and in turn, improving dispersibility of the positive active material and the conductive agent. In this way, a larger amount of positive active material can be used in the positive electrode slurry. A better conductive network is provided in a positive film layer formed by using the positive active material, the film resistance is reduced (the film resistance is less than or equal to 1 S2), and the initial Coulombic efficiency and cycle performance of the secondary battery are improved. In addition, the solvating segment contains a spin-flexible group such as C-O or C-C, thereby also increasing the flexibility of the electrode plate, and solving the problems such as self-discharge of the battery cell caused by cracks of an inner coil of a wound electrode plate that is brittle due to a thick coating layer on the electrode plate and a high compaction density.

In some embodiments, a molar ratio between the anchor group, the solvating segment, and the end group is (1 to 1.5): (8 to 8.8): (0.2 to 0.5), This improves the efficacy of the polymer used as an additive of the positive electrode material composition. In addition, by adjusting the molar ratio between the anchor group, the solvating segment, and the end group to fall within the above range, the electrical properties of the secondary battery and the flexibility of the positive electrode plate can be adjusted. For example, when the proportion of the anchor group is increased, the dispersibility of the positive active material is further improved, thereby reducing the resistance of the positive electrode plate and improving the initial Coulombic efficiency and cycle performance of the secondary battery. When the proportion of the solvating segment is increased, the formed positive electrode plate is more flexible and less brittle.

In some embodiments, the second group is any one or more selected from C₁ to C₆ alkyl or C₆ to C₁₂ aryl. Optionally, 30 ≤ a ≤ 40, 1 ≤ n ≤ 5, 4 ≤ b ≤ 8, 1 ≤ c ≤ 10, 8 ≤ d ≤ 20. Optionally, the end group is any one or more selected from C₁ to C₁₂ alkyl, C₁ to C₁₂ alkoxy, or C₆ to C₂₀ aryl. Further optionally, the end group is any one or more selected from C₁ to C₆ alkyl, C₁ to C₆ alkoxy, or C₆ to C₁₂ aryl. When the polymer containing the second group and the end group forms a slurry, the viscosity of the slurry is reduced. Therefore, the positive active material is more dispersible in the solvent, thereby improving the dispersibility of the positive active material in the solvent, and effectively alleviating the problem of cracks of the coated positive electrode plate.

In some embodiments, the molar ratio between the first group and the second group is controlled to be 2: 8 to 8: 2 to meet the dispersion requirements of positive active materials with different polarities. For example, when the polarity of the positive active material is relatively strong (that is, the graphitization degree is relatively low after a carbon coating process), the polymer with a relatively high proportion of the first group is used; when the polarity of the positive active material is relatively strong (that is, the graphitization degree is relatively low after a carbon coating process). The polymer with a relatively low proportion of the first group can improve the effect of the polymer in dispersing the positive active material.

The polymer is used as an additive of the positive electrode material composition for the main purpose of promoting the dispersion of the positive active material. A larger amount of anchor groups in the polymer is more conducive to the dispersion of the positive active material. However, larger polymer molecules are required to achieve the larger amount of anchor groups, thereby affecting the viscosity of the formed positive electrode slurry. Therefore, in some embodiments, the weight-average molecular weight of the polymer is 500 to 20000, and optionally, 1000 to 10000. The polymer with a weight-average molecular weight falling within the above range further improves the dispersibility of the positive active material on the one hand, and on the other hand, helps to control the viscosity of the formed positive electrode slurry, and facilitates coating, thereby further alleviating the problem of cracks of the coated positive electrode plate.

### [Positive electrode material composition]

Another embodiment of this application provides a positive electrode material composition. The positive electrode material composition includes a positive active material, a conductive agent, and an additive. The additive is any one of the polymers disclosed above.

The polymer of this application can implement multi-site adsorption for the positive active material of high polarity and the positive active material of low polarity, thereby achieving the purpose of efficiently dispersing positive active materials. At the same time, the structure contains a solvating segment. The solvating segment further improves the dispersibility of the positive active material and the conductive agent, forms a better conductive network in a positive film layer, reduces a film resistance (makes the resistance be less than or equal to 1 S2), and improves the initial Coulombic efficiency and cycle performance of the secondary battery. In addition, the solvating segment contains a spin-flexible group such as C-O or C-C, thereby also increasing the flexibility of the electrode plate, and solving the problems such as self-discharge of the battery caused by cracks of an inner coil of a wound electrode plate that is brittle due to a thick coating layer on the electrode plate and a high compaction density.

In some embodiments, a mass percent of the additive in the positive electrode material composition is 0.01% to 3%, and optionally 0.2% to 0.5%. The additive with a mass percent falling within the above range not only utilizes its sufficient anchor groups to sufficiently disperse the positive active material, but also preventing an excessive additive dosage from impairing the energy density of the subsequently formed positive electrode plate, thereby improving the initial Coulombic efficiency and cycle capacity retention rate of the secondary battery.

The dosage of the positive active material in the positive electrode material composition of this application may be learned by referring to prior art. Because the added additive improves the dispersibility of the positive active material, the content of the positive active material in the positive electrode material composition may be higher than that in the positive electrode material composition not containing the additive. In some embodiments, a mass percent of the positive active material in the positive electrode material composition is 94% to 99%. Optionally, the positive active material includes any one or more of lithium iron phosphate, lithium manganese iron phosphate, lithium nickel cobalt aluminum oxide, lithium nickel cobalt manganese oxide, magnesium-rich lithium nickel cobalt manganese oxide, lithium manganese spinel, or lithium nickel manganese spinel. The positive electrode material composition of this application is applicable to dispersion of various positive active materials, especially lithium iron phosphate positive active materials with varying polarities.

In some embodiments, a particle diameter Dv₅₀ of the positive active material is 0.8 µm to 2.5 µm, thereby preventing a small particle diameter from causing agglomeration and gelling of the positive active material and preventing a large particle diameter from impairing the rate performance.

The content of the conductive agent in the positive electrode material composition of this application may also be learned by referring to prior art. In some embodiments, a mass percent of the conductive agent in the positive electrode material composition is 0.3% to 3%. Optionally, the conductive agent includes one or more of conductive carbon black, conductive graphite, metal particles, carbon nanotubes, carbon fibers, graphene, or a conductive polymer, thereby maximally improving the conductivity of the formed positive film layer. The conductive carbon black may be the commonly used carbon black such as Ketjen black and acetylene black.

The content of the binder in the positive electrode material composition of this application may also be learned by referring to prior art. In some embodiments, the positive electrode material composition further includes a binder. Optionally, a mass percent of the binder in the positive electrode material composition is 0.5% to 3%. Optionally, the binder includes one or more of polyvinylidene difluoride, polytetrafluoroethylene, poly(vinylidene difluoride-co-tetrafluoroethylene), poly(vinylidene difluoride-co-hexafluoropropylene), poly(vinylidene difluoride-co-propylene), poly(tetrafluoroethylene-co-hexafluoropropylene), poly(tetrafluoroethylene-co-ethylene), poly(vinylidene difluoride-co-chlorotrifluoroethylene), poly(vinylidene difluoride-co-trifluoroethylene), or poly(vinylidene difluoride-hexafluoropropylene-co-tetrafluoroethylene). This maximally improves the adhesion of the formed positive active material to the current collector and further alleviates the problem of cracks of the electrode plate.

### [Positive electrode slurry]

Another embodiment of this application provides a positive electrode slurry, including a solvent and any one of the positive electrode material compositions disclosed above. The positive electrode slurry of this application contains the additive disclosed above, and therefore, the positive active material is uniformly dispersed in the positive electrode slurry.

In some embodiments, by adjusting the content of the solvent in the positive electrode slurry and adjusting ingredients of the positive electrode material composition to satisfy the above range, the viscosity of the positive electrode slurry is further controlled to be 4000 to 30000 mPa·s. When the viscosity of the positive electrode slurry falls within this range, the positive electrode slurry does not stratify, the viscosity does not rebound obviously after static standing, and the positive electrode slurry does not sediment or gel after being stirred slowly. The viscosity is determined by following test method:

Using a 500 ml beaker to take a sample of the positive electrode slurry that has just been well stirred in a mixing tank. Selecting the 62# rotor, setting the water bath temperature to 45 °C, setting the speed to 12 rpm, rotating the lifting knob of the viscometer to descend slowly without introducing air bubbles. Immersing the rotor into the slurry from the central position of the beaker until the groove of the rotor is submerged. Pressing the start button of the motor to start measuring and timing. Reading a relatively steady value in 3 to 6 minutes, that is, the viscosity value of the measured sample.

### [Positive electrode plate]

A positive electrode plate generally includes a positive current collector and a positive film layer that overlays at least one surface of the positive current collector. The positive film layer includes a positive active material.

As an example, the positive current collector includes two surfaces opposite to each other in a thickness direction of the positive current collector. The positive film layer is disposed on either or both of the two opposite surfaces of the positive current collector.

The positive film layer includes any one of the positive electrode material compositions disclosed above or is formed by drying any one of the positive electrode slurries disclosed above. The positive film layer of this application includes the positive electrode material composition or is formed by drying the positive electrode slurry. Therefore, the positive electrode active materials in the positive film layer are uniformly dispersed and highly conductive, and possess a lower film resistance and higher flexibility, thereby effectively alleviating the self-discharge problem of the battery containing the positive film layer.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative film layer further optionally includes a binder. As an example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. As an example, the conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is in a liquid state and includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. As an example, the additive may include a negative film-forming additive or a positive film-forming additive. The additive may further include an additive capable of improving some performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

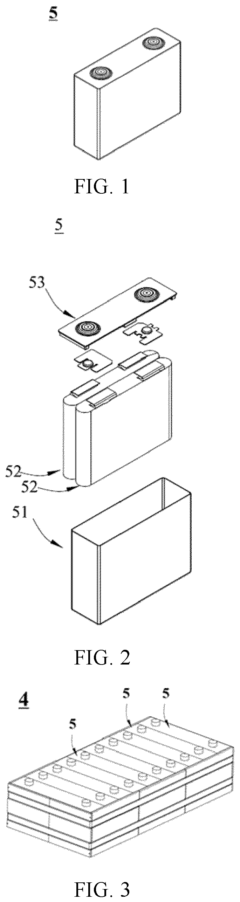

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

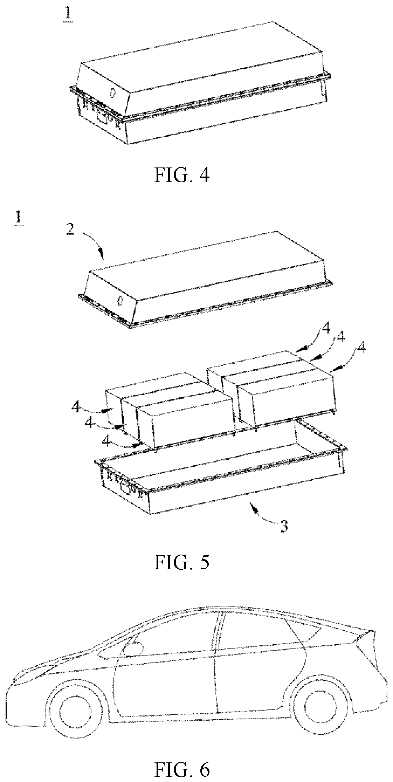

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

The positive active material is carbon-coated LiFeO₄. The positive active materials used in Embodiments 1 to 50 are carbon-coated LiFeO₄ with a measured graphitization degree of 0.195 purchased from Hunan Yuneng New Energy Battery Material Co., Ltd.. The positive active materials used in Embodiments 51 to 53 are carbon-coated LiFeO₄ with a graphitization degree of 0.281 purchased from Jiangxi Shenghua New Material Co., Ltd.. As can be seen from the graphitization degree, the surface polarity varies between the two types of materials.

### Comparative Embodiment 1

Stirring and mixing well lithium iron phosphate as a positive active material, SP carbon black as a conductive agent (purchased from Timcal, Ltd.), and polyvinylidene difluoride (PVDF) as a binder at a mass ratio of 97: 2: 1 in an N-methyl-pyrrolidone solvent system to form a positive electrode slurry. Applying the positive electrode slurry onto aluminum foil by means of extrusion coating or transfer coating, and then performing drying and cold pressing to obtain a positive electrode plate, on which the thickness of the positive film layer is 218 µm.

Stirring and mixing well artificial graphite (purchased from BTR New Material Group Co., Ltd.) as a negative active material, SP carbon black (purchased from Timcal, Ltd.) as a conductive agent, and polyvinylidene difluoride (PVDF) as a binder at a mass ratio of 97: 2: 1 in a deionized water solvent system to form a negative electrode slurry. Applying the negative electrode slurry onto copper foil, and then performing drying and cold pressing to obtain a negative electrode plate, on which the thickness of the negative film layer is 161 µm.

Using a PE porous polymer film as a separator.

Stacking the positive electrode plate, the separator, and the negative electrode plate sequentially and neatly, and winding the stacked structure to obtain a bare cell. Performing steps such as packaging, electrolyte solution injection, chemical formation, and degassing to obtain a lithium-ion battery.

### Embodiments 1 to 53

Adding the additives shown in Table 1 into the positive electrode slurry, and preparing a bare cell according to the cell preparation process described above.

The solvating segments are:
Segment represented by Formula 1: 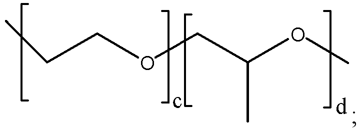
Segment represented by Formula 2: 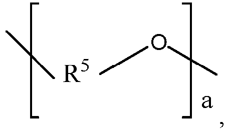 where R⁵ is butylidene; and
Segment represented by Formula 3:

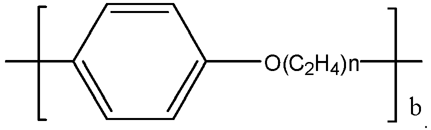

### Synthesis Example 1

In Embodiments 1 to 8 and Embodiments 39 and 40, the anchor group is a phosphate group, the solvating segment is the segment shown in Formula 1, the end group is a styrene group, and the additive synthesis process is as follows:

Measuring out a specified amount of butanol, putting the butanol into a dry three-neck flask. Stirring the mixture well at 0 °C, slowly dripping phosphorus trichloride, and controlling the temperature to a range of 0 °C to 5 °C until completion of the dripping. Subsequently, leaving the ingredients to react at a low temperature for 2 hours, and then raising the temperature to a room temperature, and continuing the reaction for 2 hours. Spinning the flask to remove the solvent impurities and the like, and collecting a dibutyl phosphite distillate at 66 °C to 67 °C by vacuum distillation.

Taking sulfonyl chloride and adding it into a dry three-neck flask. Controlling the temperature at approximately 25 °C. Stirring well, and slowly dripping dibutyl phosphite into the flask. After completion of the dripping, continuing the reaction for 2 hours at a room temperature. Spinning the flask to remove impurities at a low temperature of 35 °C. Finally, collecting a di-n-butyl chlorophosphate distillate at 96 °C to 98 °C by vacuum distillation.

Adding ethylenediamine and distilled water at a ratio of 5: 1 into a four-neck flask. Adding ethylene oxide dropwise at a room temperature, and then adding a 50% alkali aqueous solution dropwise. Stirring the solution for 1 hour. Reducing the pressure and dehydrating the mixture to obtain a white viscous substance. Moving the viscous substance into a polymerization reactor, filling the reactor with nitrogen to replace the reactive atmosphere, stirring and heating up the mixture with a pressure less than or equal to 0.6 Pa, controlling the temperature to be in the range of 120 °C to 160 °C, and adding propylene oxide (the mass ratio between the propylene oxide and the white viscous substance is 3: 1). After completion of thorough reaction, outputting the reaction product at a room temperature to obtain a light yellow oily substance, that is, polyether.

Adding the polyether prepared in the above process into a reactor, and mixing di-n-butyl chlorophosphate and the polyether at a molar ratio of 2.5: 1 by stirring well at a temperature of 40 °C to 60 °C. Gradually adding the mixture into the reactor, raising the temperature to a range of 70 °C to 80 °C, and continuing the reaction time for 5 to 6 hours to obtain an intermediate.

Dissolving the intermediate and styrene in acetonitrile, adding a catalyst dose of azobisisobutyronitrile (AIBN) initiator, stirring well at a room temperature, and raising the reaction temperature to a range of 75 °C to 80 °C to polymerize. Vacuum-drying the reaction product of the polymerization upon completion of the reaction to obtain a copolymer.

### Synthesis Example 2

In Embodiments 9 to 13, the anchor group is a phosphate group, the solvating segment is the segment shown in Formula 2, the end group is a styrene group, and the additive synthesis process is as follows:

Adding ethylenediamine and distilled water at a ratio of 5: 1 into a four-neck flask. Adding butylene oxide dropwise at a room temperature, and then adding a 50% alkali aqueous solution dropwise. Stirring the solution for 1 hour. Reducing the pressure and dehydrating the mixture to obtain a white viscous substance. Moving the viscous substance into a polymerization reactor, filling the reactor with nitrogen to replace the reactive atmosphere, stirring and heating up the mixture with a pressure less than or equal to 0.6 Pa, and controlling the temperature to be in the range of 120 °C to 160 °C. After completion of thorough reaction, outputting the reaction product at a room temperature to obtain a light yellow oily substance, that is, polyether.

Adding the polyether prepared in the above process into a reactor, and mixing di-n-butyl chlorophosphate and the polyether at a molar ratio of 2.5: 1 by stirring well at a temperature of 40 °C to 60 °C. Gradually adding the mixture into the reactor, raising the temperature to a range of 70 °C to 80 °C, and continuing the reaction time for 5 to 6 hours to obtain an intermediate.

Dissolving the intermediate and styrene in acetonitrile, adding a catalyst dose of azobisisobutyronitrile (AIBN) initiator, stirring well at a room temperature, and raising the reaction temperature to a range of 75 °C to 80 °C to polymerize. Vacuum-drying the reaction product of the polymerization upon completion of the reaction to obtain a copolymer.

### Synthesis Example 3

In Embodiments 14 to 20, the anchor group is a phosphate group, the solvating segment is the segment shown in Formula 3, the end group is a styrene group, and the additive synthesis process is as follows:
Reacting alkylphenol polyoxyethylene ether and di-n-butyl chlorophosphate at 70 °C to 80 °C for 5 to 6 hours to obtain an intermediate.

Dissolving the intermediate and styrene in acetonitrile, adding a catalyst dose of azobisisobutyronitrile (AIBN) initiator, stirring well at a room temperature, and raising the reaction temperature to a range of 75 °C to 80 °C to polymerize. Vacuum-drying the reaction product of the polymerization upon completion of the reaction to obtain a copolymer.

Selecting the alkylphenol polyoxyethylene ether with a corresponding molecular weight to adjust the n value and b value. Adjusting the molar ratio between the anchor group, the solvating segment, and the end group by adjusting the dosages of the phosphorylated reagent, the alkylphenol polyethylene glycol ether, and the styrene.

### Synthesis Example 4

In Embodiments 21 to 23, the anchor group is a sulfonic acid group, the solvating segment is the segment shown in Formula 1, and the end group is a styrene group, and the additive synthesis process is as follows:
Reacting the polyether obtained in Synthesis Example 1 with vinylsulfonic acid at a reaction temperature of 60 °C to 70 °C for a reaction time of 5 to 6 hours by using a strong acid as a catalyst, and then neutralizing the reaction product, and polymerizing the reaction product with styrene at 75 °C to 80 °C to obtain the additive.

### Synthesis Example 5

In Embodiments 24 to 26, the anchor group is a sulfonic acid group, the solvating segment is the segment shown in Formula 2, and the end group is a styrene group, and the additive synthesis process is as follows:
Reacting the polyether obtained in Synthesis Example 2 with vinylsulfonic acid at a reaction temperature of 60 °C to 70 °C for a reaction time of 5 to 6 hours by using a strong acid as a catalyst, and then neutralizing the reaction product, and polymerizing the reaction product with styrene at 75 °C to 80 °C to obtain the additive.

### Synthesis Example 6

In Embodiments 27 to 29, the anchor group is a sulfonic acid group, the solvating segment is the segment shown in Formula 3, and the end group is a styrene group, and the additive synthesis process is as follows:
Reacting the alkylphenol polyoxyethylene ether with vinylsulfonic acid at a reaction temperature of 60 °C to 70 °C for a reaction time of 5 to 6 hours by using a strong acid as a catalyst, and then neutralizing the reaction product, and polymerizing the reaction product with styrene at 75 °C to 80 °C to obtain the additive.

### Synthesis Example 7

In Embodiments 30 to 32 and Embodiments 48 and 49, the anchor group is a carboxylic acid group, the solvating segment is the segment shown in Formula 1, the end group is a styrene group, and the additive synthesis process is as follows:
Performing esterification synthesis of the polyether obtained in Synthesis Example 1 and an unsaturated carboxylic acid (such as acrylic acid or methacrylic acid, selected depending on the target additive) at a reaction temperature of 45 °C to 60 °C for a reaction time of 3 to 4 hours by using a strong acid as a catalyst, and then polymerizing the reaction product with styrene to obtain the additive.

### Synthesis Example 8

In Embodiments 33 to 35, the anchor group is a carboxylic acid group, the solvating segment is the segment shown in Formula 2, the end group is a styrene group, and the additive synthesis process is as follows:
Performing esterification synthesis of the polyether obtained in Synthesis Example 2 and an unsaturated carboxylic acid (such as acrylic acid or methacrylic acid, selected depending on the target additive) at a reaction temperature of 45 °C to 60 °C for a reaction time of 3 to 4 hours by using a strong acid as a catalyst, and then polymerizing the reaction product with styrene to obtain the additive.

### Synthesis Example 9

In Embodiments 36 to 38, the anchor group is a carboxylic acid group, the solvating segment is the segment shown in Formula 3, the end group is a styrene group, and the additive synthesis process is as follows:
Performing esterification synthesis of the alkylphenol polyoxyethylene ether and an unsaturated carboxylic acid (such as acrylic acid or methacrylic acid, selected depending on the target additive) at a reaction temperature of 45 °C to 60 °C for a reaction time of 3 to 4 hours by using a strong acid as a catalyst, and then polymerizing the reaction product with styrene to obtain the additive.

### Synthesis Example 10

In Embodiment 41, the anchor group is a phosphate group, the solvating segment is the segment shown in Formula 1, the end group is a butyl group, and the additive synthesis process is as follows:
Polymerizing the intermediate obtained in Synthesis Example 1 and butene at 70 °C to 75 °C to obtain the additive, in which the initiator is azobisisobutyronitrile (AIBN).

### Synthesis Example 11

The amide polyether (the anchor group is an amido group, the solvating segment is the segment shown in Formula 1, and the end group is a styrene group) in Comparative Embodiment 2 is synthesized as follows:
Adding the polyether obtained in Synthesis Example 1 into a reactor, and mixing butenamide and the polyether at a molar ratio of 2.5: 1 by stirring well at a temperature of 40 °C to 60 °C. Gradually adding the mixture into the reactor, raising the temperature to a range of 70 °C to 80 °C, and continuing the reaction time for 5 to 6 hours to obtain an intermediate.

Dissolving the intermediate and styrene in acetonitrile, adding a catalyst dose of azobisisobutyronitrile (AIBN) initiator, stirring well at a room temperature, and raising the reaction temperature to a range of 75 °C to 80 °C to polymerize. Vacuum-drying the reaction product of the polymerization upon completion of the reaction to obtain a copolymer.

### Synthesis Example 12

The polyacrylamide in Comparative Embodiment 3 is synthesized as follows:
Adding the AM aqueous solution (w = 20%) into a four-neck flask, passing N₂ into the flask to replace the atmosphere in the flask, and stirring and heating up to 50 °C to 80 °C. Adding an initiator (NH₄)₂S₂O₈/NaHSO₃) at a mixing ratio of 1: 1, and adding a chain transfer agent such as thioethanol. Keeping the temperature constant, stirring for 5 to 6 hours and then stopping the reaction. Subsequently, adding the mixture into absolute ethanol at a mixing ratio of 1: 4 so that white sediment is precipitated. Suction-filtering the sediment, and then vacuum-drying the filtered substance at a pressure of 0.1 MPa and a temperature of 40 °C for 24 hours until the weight remains constant to obtain the desired substance.

The structures of the above synthesized products are characterized by infrared to prove that the resulting product is a target compound.

**Table 1**

| Serial number | Type of additive | | | | Molar ratio between anchor group, solvating segment, and end group | Content of additive in dry substance of positive electrode slurry (%) | Mass percent of positive active material (%) | Mass percent of conductiv e agent (%) | Mass percent of binder (%) | Solid content (%) |
|---|---|---|---|---|---|---|---|---|---|---|
| | Anchor group | Solvating segment | End group | Weight-average molecular weight | | | | | | |
| Embodiment 1 | -PO(OH)O CH₂CH₂CH₂C H₃ | Segment represented by Formula 1, where c is 10, and d is 40 | Styrene group | 3200 | 1.5: 8: 0.5 | 0.5 | 95.5 | 2 | 2 | 69 |
| 2 | | | | | | 1.5 | 94.5 | 2 | 2 | 68 |
| 3 | | | | | | 0.2 | 95.8 | 2 | 2 | 69 |
| 4 | | | | | | 0.1 | 95.9 | 2 | 2 | 68 |
| 5 | | | | | | 3 | 93 | 2 | 2 | 68 |
| 6 | | Segment represented by Formula 1, where c is 20, and d is 60 | | 4800 | | 0.5 | 95.5 | 2 | 2 | 69 |
| 7 | | Segment represented by Formula 1, where c is 20, and d is 8 | | 1700 | | 0.5 | 95.5 | 2 | 2 | 65 |
| 8 | | Segment represented by Formula 1, where c is 0, and d is 40 | | 2800 | | 0.5 | 95.5 | 2 | 2 | 65 |
| 9 | | Segment represented by Formula 2, where a is 40 | | 2200 | | 0.5 | 95.5 | 2 | 2 | 68 |
| 10 | | | | 2200 | | 1.5 | 94.5 | 2 | 2 | 68 |
| 11 | | | | 2200 | | 0.2 | 95.8 | 2 | 2 | 68 |
| 12 | | Segment represented by Formula 2, where a is 30 | | 1600 | | 0.5 | 95.5 | 2 | 2 | 67 |
| 13 | | Segment represented by Formula 2, where a is 60 | | 3000 | | 0.5 | 95.5 | 2 | 2 | 67 |
| 14 | | Segment represented by Formula 3, where n is 6, and b is 7 | | 2200 | | 0.5 | 95.5 | 2 | 2 | 69 |
| 15 | | | | 2200 | | 1.5 | 94.5 | 2 | 2 | 68 |
| 16 | | | | 2200 | | 0.2 | 95.8 | 2 | 2 | 69 |
| 17 | | Segment represented by Formula 3, where n is 4, and b is 8 | | 1950 | | 0.5 | 95.5 | 2 | 2 | 68 |
| 18 | | Segment represented by Formula 3, where n is 8, and b is 4 | | 1600 | | 0.5 | 95.5 | 2 | 2 | 68 |
| 19 | | Segment represented by Formula 3, where n is 10, and b is 1 | | 680 | | 0.5 | 95.5 | 2 | 2 | 65 |
| 20 | | Segment represented by Formula 3, where n is 1, and b is 8 | | 1200 | | 0.5 | 95.5 | 2 | 2 | 65 |
| 21 | -SO₃H and - SO₃CH₂CH₂C H₂CH₃ are | Same as Embodiment 1 | | 3000 | | 0.5 | 95.5 | 2 | 2 | 68 |
| 22 | mixed at a molar ratio of 1: 1 | Same as Embodiment 1 | | 3000 | | 1.5 | 94.5 | 2 | 2 | 67 |
| 23 | | Same as Embodiment 1 | | 3000 | | 0.2 | 95.8 | 2 | 2 | 68 |
| 24 | | Same as Embodiment 9 | | 2000 | | 0.5 | 95.5 | 2 | 2 | 67 |
| 25 | | Same as Embodiment 9 | | 2000 | | 1.5 | 94.5 | 2 | 2 | 66.5 |
| 26 | | Same as Embodiment 9 | | 2000 | | 0.2 | 95.8 | 2 | 2 | 67 |
| 27 | | Same as Embodiment 14 | | 2100 | | 0.5 | 95.5 | 2 | 2 | 67 |
| 28 | | Same as Embodiment 14 | | 2100 | | 1.5 | 94.5 | 2 | 2 | 66.5 |
| 29 | | Same as Embodiment 14 | | 2100 | | 0.2 | 95.8 | 2 | 2 | 67 |
| 30 | -COOH and-COOCH₂CH₃ are mixed at a molar ratio of 1: 1 | Same as Embodiment 1 | | 2900 | | 0.5 | 95.5 | 2 | 2 | 68 |
| 31 | | Same as Embodiment 1 | | 2900 | | 1.5 | 94.5 | 2 | 2 | 67 |
| 32 | | Same as Embodiment 1 | | 2900 | | 0.2 | 95.8 | 2 | 2 | 68 |
| 33 | | Same as Embodiment 9 | | 1900 | | 0.5 | 95.5 | 2 | 2 | 67 |
| 34 | | Same as Embodiment 9 | | 1900 | | 1.5 | 94.5 | 2 | 2 | 66 |
| 35 | | Same as Embodiment 9 | | 1900 | | 0.2 | 95.8 | 2 | 2 | 67 |
| 36 | | Same as Embodiment 14 | | 2000 | | 0.5 | 95.5 | 2 | 2 | 67 |
| 37 | | Same as Embodiment 14 | | 2000 | | 1.5 | 94.5 | 2 | 2 | 66 |
| 38 | | Same as Embodiment 14 | | 2000 | | 0.2 | 95.8 | 2 | 2 | 67 |
| 39 | -PO(OH)O CH₂CH₂CH₂C H₃ | Segment represented by Formula 1, where c is 18, and d is 50 | | 4500 | | 0.5 | 95.5 | 2 | 2 | 69 |
| 40 | -PO(OR³)OR⁴, where R³ is phenyl, and R⁴ is butyl | Same as Embodiment 1 | | 4580 | | 0.5 | 95.5 | 2 | 2 | 64 |
| 41 | Same as Embodiment 1 | | Butyl | 4550 | | 0.5 | 95.5 | 2 | 2 | 68 |
| 42 | | | Same as Embodi ment 1 | 2200 | | 0.5 | 94 | 3 | 2.5 | 69 |
| 43 | | | | 2200 | | 0.5 | 99 | 0.25 | 0.25 | 69 |
| 44 | | | | 2200 | | 0.5 | 97 | 0.3 | 2.2 | 69 |
| 45 | | | | 2200 | | 0.5 | 95.5 | 3 | 2 | 69 |
| 46 | | | | 2200 | | 0.5 | 96.5 | 2.5 | 0.5 | 69 |
| 47 | | | | 2200 | | 0.5 | 94.5 | 2 | 3 | 69 |
| 48 | -COOH and-COOCH₂CH₃ are mixed at a ratio of 2: 8 | Same as Embodiment 1 | | 3000 | | 0.5 | 95.5 | 2 | 2 | 68 |
| 49 | -COOH and-COOCH₂CH₃ are mixed at a molar ratio of 8: 2 | Same as Embodiment 1 | | 2800 | | 0.5 | 95.5 | 2 | 2 | 68 |
| 50 | Same as Embodiment 1 | | | 3000 | 1: 8.8: 0.2 | 0.5 | 95.5 | 2 | 2 | 67 |
| Comparative Embodiment 1 | - | - | - | - | - | 0 | 96 | 2 | 2 | 56 |
| 2 | CH₃CH₂CH₂C H₂₋ CO-NH- | Same as Embodiment 1 | Same as Embodi ment 1 | 3000 | 1.5: 8: 0.5 | 0.5 | 95.5 | 2 | 2 | 63 |
| 3 | Polyacrylamide | | | 3000 | 1.5: 8: 0.5 | 0.5 | 95.5 | 2 | 2 | 63 |
| 4 | Same as Embodiment 1 | | | | | 5 | 94.0 | 0.5 | 0.5 | 69 |

Embodiment 51: differs from Embodiment 1 in only the positive active material.

Embodiment 52: differs from Embodiment 9 in only the positive active material.

Embodiment 53: differs from Embodiment 14 in only the positive active material.

### Test Methods

### 1) Solid content

Putting a moisture tester onto a specified worktop, adjusting the bracket so that the horizontal air bubble is centrally located and the moisture tester is in a horizontal state. Opening the upper cover of the tester, putting an aluminum pan into the tester, tapping "Reset the control panel", adding 5 to 8 grams of slurry, and putting down the top cover. Setting the temperature of the moisture tester to 120 °C. The mass percent displayed upon completion of the test is the mass percent of the consumed moisture, and the solid content is calculated as: solid content = 100% - mass percent of the consumed moisture.

### 2) Viscosity of the positive electrode slurry

Using a 500 ml beaker to take a sample of the positive electrode slurry that has just been well stirred in a mixing tank. Selecting the 62# rotor, setting the water bath temperature to 45 °C, setting the speed to 12 rpm, rotating the lifting knob of the viscometer to descend slowly without introducing air bubbles. Immersing the rotor into the slurry from the central position of the beaker until the groove of the rotor is submerged. Pressing the start button of the motor to start measuring and timing. Reading a relatively steady value in 3 to 6 minutes, that is, the viscosity value of the measured sample.

### 3) Gelation status after 12-hour static standing

Making 500 ml of fresh slurry readily available. Sealing the fresh slurry in the beaker by use of cling film, and leaving the slurry to stand in a metal cabinet for 12 hours. Opening the cling film, and gently flipping the surface of the slurry by use of a steel rule to check the status of the slurry.

The gelation status is divided into the following grades:
(1) Mild gelation: The slurry is of good fluidity, there is a noticeable reflection on the liquid surface of the slurry, and the flow line of the slurry protrudes against the liquid surface.
(2) Moderate gelation: The slurry is of low fluidity, flocculent, but assumes no solid nature and contains no jelly lumps.
(3) Severe gelation: The slurry is non-fluidic and jelly-like, assumes a solid nature, and can be picked up as a whole.

### 4) Cracks of coating

Performing the coating process in an 18 m oven, and setting the coating speed to 6 m/min. Observing whether there are any cracks visible to the naked eye on the coating layer.

5) Electrode plate brittleness test: Taking samples from a non-thinned part of a non-defective electrode plate by cutting the electrode plate lengthwise, where each sample is 20 cm (length) × 2.5 cm (width) in size, and the number of samples is greater than or equal to 8. First, folding the sample in half, and then placing the electrode plate onto a test platform, and rolling the electrode plate for 1 time by using a 2 kg cylindrical roller. When the electrode plate becomes transparent by folding, recording the number of folds as 1 in the brittleness test. If the film is still not transparent, repeating the operations of folding reversely in half and rolling. Observing the fold against light to see whether the electrode plate is transparent or broken, and recording the actual number of folds. The more times the electrode plate can be folded without being transparent or broken, the stronger the flexibility, and the lower the brittleness of the electrode plate.

### 6) Film resistance of the positive electrode

Film resistance: Cutting the positive electrode plate into pieces of 4 cm × 25 cm, and cold-pressing the pieces to form samples.

Starting up a BER1100 resistance tester manufactured by Xiamen Initial Energy Science & Technology Co. Ltd., and setting the mode to a single-point mode, where the test area of the input terminal is 154.02 mm², the number of parallel samples is 20, the pressure is 0.4 t, and the time interval is t = 15 s. Placing the current collector of the sample electrode plate in the middle of the probe, tapping the "Run" button on the software, and then flipping the reversal valve downward. Automatically collecting a data value after an interval of 15 seconds.

### 7) Initial Coulombic efficiency

Leaving the battery to stand for 5 minutes, and then charging the battery at a constant current rate of 0.02 C for 10 hours for chemical formation, and recording the charge capacity as C₀; leaving the battery to stand for 5 minutes, charging the battery at a constant current rate of 0.5 C until the voltage reaches 3.65 V, and recording the charge capacity as C₁; leaving the battery to stand for 5 minutes, discharging the battery at a current rate of 0.5 C until the voltage reaches 2.5 V, and recording the discharge capacity as D₀. Calculating the initial Coulombic efficiency (ICE) as: ICE = D₀/(C₁ + C₀).

### 8) Cycle capacity retention rate test

Putting a prepared secondary battery onto a Neware battery tester. Charging the battery at a constant current rate of 0.33 C at a temperature of 45 °C until the voltage reaches the rated voltage, and then charging the battery at a constant voltage. Leaving the battery to stand for 10 minutes, and then discharging the battery at a constant current rate of 0.33 C until the voltage reaches the cut-off voltage, recording the discharge capacity at this time, and then leaving the battery to stand for 10 minutes, thereby completing one cycle. Repeating the above steps for 300 cycles, and calculating the capacity retention rate as: capacity retention rate = (300^{th}-cycle capacity/first-cycle capacity) × 100%.

**Table 2**

| | Viscosity of positive electrode slurry (mPa·s) | Gelation status after 12-hour static standing | Cracks of coating | Brittleness of electrode plate (number of times) | Film resistance of positive electrode (Ω) | Initial Coulombic efficiency (%) | Capacity retention rate at end of 300 cycles (%) |
|---|---|---|---|---|---|---|---|
| Embodiment 1 | 5000 | No gelation | No cracks | 5 | 0.30 | 93.00 | 94.00 |
| 2 | 8000 | No gelation | No cracks | 5 | 0.40 | 92.25 | 93.00 |
| 3 | 5300 | No gelation | No cracks | 5 | 0.30 | 93.00 | 94.00 |
| 4 | 8000 | No gelation | No cracks | 4 | 0.38 | 92.00 | 93.00 |
| 5 | 7800 | No gelation | No cracks | 5 | 0.45 | 92.00 | 93.00 |
| 6 | 4200 | No gelation | No cracks | 6 | 0.30 | 93.00 | 94.00 |
| 7 | 15000 | Slight gelation | Slight cracking | 3 | 0.50 | 91.00 | 92.30 |
| 8 | 16000 | Slight gelation | Slight cracking | 3 | 0.50 | 91.00 | 92.00 |
| 9 | 6500 | No gelation | No cracks | 6 | 0.40 | 93.00 | 94.56 |
| 10 | 6700 | No gelation | No cracks | 6 | 0.40 | 92.15 | 93.00 |
| 11 | 6500 | No gelation | No cracks | 6 | 0.42 | 93.00 | 94.00 |
| 12 | 8600 | Slight gelation | Slight cracking | 5 | 0.45 | 92.15 | 93.00 |
| 13 | 8900 | Slight gelation | Slight cracking | 5 | 0.44 | 92.30 | 93.00 |
| 14 | 6000 | No gelation | No cracks | 5 | 0.40 | 94.00 | 94.30 |
| 15 | 8000 | No gelation | No cracks | 5 | 0.45 | 92.25 | 92.00 |
| 16 | 6300 | No gelation | No cracks | 5 | 0.40 | 94.00 | 94.00 |
| 17 | 8300 | No gelation | No cracks | 5 | 0.48 | 92.00 | 92.00 |
| 18 | 8600 | No gelation | No cracks | 5 | 0.48 | 92.00 | 92.00 |
| 19 | 21000 | Slight gelation | Slight cracking | 3 | 0.55 | 90.00 | 91.30 |
| 20 | 19000 | Slight gelation | Slight cracking | 3 | 0.53 | 90.00 | 90.00 |
| 21 | 6300 | No gelation | No cracks | 5 | 0.40 | 93.00 | 94.50 |
| 22 | 9000 | No gelation | No cracks | 5 | 0.50 | 92.00 | 92.00 |
| 23 | 6600 | No gelation | No cracks | 5 | 0.42 | 93.00 | 94.30 |
| 24 | 9000 | No gelation | No cracks | 4.5 | 0.50 | 92.00 | 93.50 |
| 25 | 11000 | No gelation | No cracks | 4.5 | 0.55 | 91.00 | 92.00 |
| 26 | 8999 | No gelation | No cracks | 4.5 | 0.48 | 92.00 | 93.30 |
| 27 | 8000 | No gelation | No cracks | 5 | 0.40 | 93.00 | 94.50 |
| 28 | 10000 | No gelation | No cracks | 5 | 0.50 | 92.00 | 92.00 |
| 29 | 8300 | No gelation | No cracks | 5 | 0.43 | 93.00 | 93.30 |
| 30 | 11300 | No gelation | No cracks | 5 | 0.44 | 93.80 | 92.50 |
| 31 | 15000 | No gelation | No cracks | 5 | 0.55 | 91.70 | 92.00 |
| 32 | 11500 | No gelation | No cracks | 5 | 0.46 | 93.00 | 93.30 |
| 33 | 10000 | No gelation | No cracks | 4.8 | 0.47 | 93.00 | 93.50 |
| 34 | 14000 | No gelation | No cracks | 4.8 | 0.55 | 91.00 | 91.00 |
| 35 | 11890 | No gelation | No cracks | 4.8 | 0.48 | 92.00 | 93.30 |
| 36 | 10000 | No gelation | No cracks | 5 | 0.40 | 93.00 | 94.00 |
| 37 | 12000 | No gelation | No cracks | 5 | 0.50 | 92.00 | 92.00 |
| 38 | 9900 | No gelation | No cracks | 5 | 0.43 | 93.00 | 94.00 |
| 39 | 5600 | No gelation | No cracks | 6 | 0.30 | 93.30 | 93.68 |
| 40 | 23000 | Slight gelation | Slight cracking | 5 | 0.62 | 0.90 | 90.00 |
| 42 | 6700 | No gelation | No cracks | 5 | 0.40 | 92.80 | 93.00 |
| 42 | 6000 | No gelation | No cracks | 5 | 0.30 | 93.00 | 94.00 |
| 43 | 7500 | No gelation | No cracks | 5 | 0.30 | 93.00 | 94.00 |
| 44 | 4000 | No gelation | No cracks | 5 | 0.56 | 92.00 | 92.00 |
| 45 | 12000 | Slight gelation | No cracks | 5 | 0.45 | 94.00 | 93.00 |
| 46 | 5000 | No gelation | Slight cracking | 5 | 0.35 | 93.00 | 93.00 |
| 47 | 5000 | No gelation | No cracks | 4 | 0.35 | 93.00 | 93.00 |
| 48 | 10300 | No gelation | No cracks | 5 | 0.45 | 93.00 | 92.00 |
| 49 | 10680 | No gelation | No cracks | 5 | 0.44 | 93.00 | 92.00 |
| 50 | 7200 | No gelation | No cracks | 5 | 0.35 | 92.0 | 91.00 |
| 51 | 5260 | No gelation | No cracks | 5 | 0.33 | 93.30 | 94.10 |
| 52 | 6380 | No gelation | No cracks | 6 | 0.38 | 93.00 | 94.00 |
| 53 | 7000 | No gelation | No cracks | 5 | 0.40 | 93.60 | 93.60 |
| Comparative Embodiment 1 | 48900 | Severe gelation | Severe cracking | 2 | 0.85 | 83 | 78 |
| 2 | 42800 | Medium-level gelation | Slight cracking | 3 | 0.78 | 88 | 88 |
| 3 | 8000 | No gelation | No cracks | 5 | 0.3 | 88 | 85 |

The solid content, viscosity, gelation status after 12-hour standing, brittleness of electrode plate, and film resistance in the above table are classified as electrode plate processing performance indicators; and the initial Coulombic efficiency and the capacity retention rate (%) at the end of 300 cycles are classified as electrical performance indicators. As can be seen from the data in the table above:
1) Compared with Comparative Embodiment 1 without adding relevant additives, as can be seen from Embodiments 1 to 51, the added additive of this application improves the processing performance and electrical performance of the battery cell significantly.
2) Compared with the polyacrylamide in Comparative Embodiment 2, as can be seen from Embodiments 1 to 51, the added additive of this application leads to superior processing performance and electrical performance of the battery cell.
3) Compared with Comparative Embodiment 3, as can be seen from Embodiments 1 to 51, an overdose of the additive of this application leads to superior processing performance but deteriorates the electrical performance.
4) As can be seen from Embodiment 40 versus Embodiments 1 to 39, when the anchor group includes only the non-polar second group, only the non-polar moiety is anchored, the dispersion effect is weakened, the film resistance is increased, and the electrical performance is slightly low.
5) As can be seen from Embodiments 1, 7, and 8 versus Embodiments 9, 12, and 13 and Embodiments 14, 19, and 20, when the ingredients of the additive change, the viscosity of the positive electrode slurry containing the additive changes, thereby affecting the gelation status and coating cracking status of the positive electrode slurry.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A polymer, wherein the polymer comprises an anchor group, a solvating segment, and an end group, and the anchor group is any one or more selected from - COOR¹, -SO₃R², or -PO(OR³)OR⁴,
R¹, R², R³ and R⁴ each independently comprise a first group and a second group, the first group is H, and the second group is any one or more selected from C₁ to C₁₂ alkyl, C₆ to C₂₀ aryl, or C₅ to C₂₀ heteroaryl;
the solvating segment is any one or more selected from segments that comprise the following structural units: 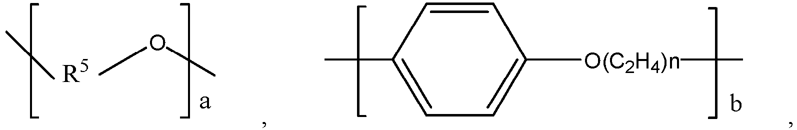
or 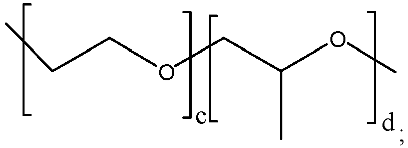
R⁵ is any one selected from C₁ to C₆ alkylidene; and
30 ≤ a ≤ 60, 1 ≤ n ≤ 10, 1 ≤ b ≤ 8, 0 ≤ c ≤ 20, and 8 ≤ d ≤ 60.

2. The polymer according to claim 1, wherein a molar ratio between the anchor group, the solvating segment, and the end group is (1 to 1.5): (8 to 8.8): (0.2 to 0.5); optionally, the second group is any one or more selected from C₁ to C₆ alkyl or C₆ to C₁₂ aryl; and optionally, 30 ≤ a ≤ 40, 4 ≤ n ≤ 8, 4 ≤ b ≤ 8, 10 ≤ c ≤ 20, 40 ≤ d ≤ 60.

3. The polymer according to claim 1 or 2, wherein a molar ratio between the first group and the second group is 2: 8 to 8: 2.

4. The polymer according to any one of claims 1 to 3, wherein the end group is any one or more selected from C₁ to C₁₂ alkyl, C₁ to C₁₂ alkoxy, or C₆ to C₂₀ aryl; and optionally, the end group is any one or more selected from C₁ to C₆ alkyl, C₁ to C₆ alkoxy, or C₆ to C₁₂ aryl.

5. The polymer according to any one of claims 1 to 4, wherein a weight-average molecular weight of the polymer is 500 to 20000, and optionally 10000 to 10000.

6. A positive electrode material composition, comprising a positive active material, a conductive agent, and an additive, wherein the additive is the polymer according to any one of claims 1 to 5.

7. The positive electrode material composition according to claim 6, wherein a mass percent of the additive in the positive electrode material composition is 0.01% to 3%, and optionally 0.2% to 0.5%.

8. The positive electrode material composition according to claim 6 or 7, wherein, a mass percent of the positive active material in the positive electrode material composition is 94% to 99%; optionally, the positive active material comprises any one or more of lithium iron phosphate, lithium manganese iron phosphate, lithium nickel cobalt aluminum oxide, lithium nickel cobalt manganese oxide, magnesium-rich lithium nickel cobalt manganese oxide, lithium manganese spinel, or lithium nickel manganese spinel; and optionally, a particle diameter Dv₅₀ of the positive active material is 0.8 µm to 2.5 µm.

9. The positive electrode material composition according to any one of claims 6 to 8, wherein a mass percent of the conductive agent in the positive electrode material composition is 0.3% to 3%, and optionally, the conductive agent comprises one or more of conductive carbon black, conductive graphite, metal particles, carbon nanotubes, carbon fibers, graphene, or a conductive polymer.

10. The positive electrode material composition according to any one of claims 6 to 9, wherein the positive electrode material composition further comprises a binder; optionally, a mass percent of the binder in the positive electrode material composition is 0.5% to 3%; optionally, the binder comprises one or more of polyvinylidene difluoride, polytetrafluoroethylene, poly(vinylidene difluoride-co-tetrafluoroethylene), poly(vinylidene difluoride-co-hexafluoropropylene), poly(vinylidene difluoride-co-propylene), poly(tetrafluoroethylene-co-hexafluoropropylene), poly(tetrafluoroethylene-co-ethylene), poly(vinylidene difluoride-co-chlorotrifluoroethylene), poly(vinylidene difluoride-co-trifluoroethylene), or poly(vinylidene difluoride-hexafluoropropylene-co-tetrafluoroethylene).

11. A positive electrode slurry, comprising a solvent and the positive electrode material composition according to any one of claims 6 to 10.

12. The positive electrode slurry according to claim 11, wherein a viscosity of the positive electrode slurry is 4000 to 30000 mPa S.

13. A positive electrode plate, comprising a current collector and a positive film layer, wherein the positive film layer comprises the positive electrode material composition according to any one of claims 6 to 10 or is formed by drying the positive electrode slurry according to claim 11 or 12.

14. A secondary battery, comprising a positive electrode plate, a separator, and a negative electrode plate, wherein the positive electrode plate is the positive electrode plate according to claim 13.

15. An electrical device, comprising a secondary battery or a battery module or a battery pack, wherein the secondary battery is selected from the secondary battery according to claim 14.
